# EUROPEAN PATENT APPLICATION

(11) **EP 4 671 096 A1**
(43) Date of publication of application: **31.12.2025**
(21) Application number: 25184976.6
(22) Date of filing: 24.06.2025
(51) Int. Cl.: B62H 1/04, B62H 5/00

(54) **KICKSTAND FOR A VEHICLE**

(30) Priority: 25.06.2024 SE 2450701
(71) Applicant: Atran Velo AB, 31150 Falkenberg (SE)
(72) Inventor: Lindén, Krister, 311 94 Falkenberg (SE); Pentéus, Ulf, 311 42 Falkenberg (SE); Pettersson, Roger, 311 37 Falkenberg (SE)
(74) Representative: Ström & Gulliksson AB

(57) **Abstract**

This disclosure provides a kickstand (10) for supporting a vehicle (60), comprising a support base (20) fixedly attached to a frame (61) of a vehicle (60), a support member (30) pivotally attached to the support base (20), said support member (30) being movable between an extended position and a retracted position, and a latch (40) connected to the support base (20) and a locking member (33) connected to the support member (30), wherein said latch (40) is movable between a locked position, in which it hinders movement of the locking member (33), and a release position, in which it does not hinder movement the locking member (33), such that the support member (30) is movable from the extended position to the retracted position only when the kickstand (10) is in the unlocked state, and a release device (50) configured to control the position of the latch (40).

## Description

### TECHNICAL FIELD

The present invention relates to a kickstand. More specifically, the present invention relates to a kickstand for supporting a vehicle, such as for example a bicycle.

### BACKGROUND

Transport bicycles, also called cargo bikes, is a collective name for bicycles designed and built specifically for the transportation of people and goods. Vehicles of this type are becoming increasingly common, especially since the introduction of the electric motor, which helps cyclists to travel further and carry more cargo.

The main types of such transport bikes are: Long John variants, where the loading surface is placed between the cyclist and the front wheel, Long Tail variants, where the load is mostly placed above the rear wheel, and Tricycles, where the load area is placed between the front or rear wheels. Cargo bikes thus differ from regular bikes in their carrying capacity. They are capable of carrying significantly more weight than a traditional bicycle. In order to safely move larger loads, cargo bikes have reinforced frames. They may also comprise electric motors, adding to the weight. Electric motors may assists in propulsion for example when carrying heavy loads or traversing inclines. When the weight of the bicycle itself is added to the transported load, the moving mass increases. Most bikes are equipped with a side support, but due to the higher weight and load capacity of the cargo bike, a support adapted for a higher weight is needed when the bike is not in use for stable and safe parking. Similar weight considerations apply to other vehicles such as motorcycles, indicating a need for robust support solutions.

One support stand that is commonly used in the above mentioned example is a double support. The double support comprises two elongated members (support legs) for supporting the vehicle against the ground. The support is usually located on the underside of the bike, between the front and back wheel(s), with the leg extending towards differing sides of the bike (left and right). The support legs (outriggers) may together be U- or V-shaped. These support legs may be attached to a support base and may pivotally move between two fixed positions, one extended (folded down, supporting) position in which the vehicle is supported by the stand and one retracted (folded up, resting) position in which it is not.

In the extended position of the support stand, a two-wheeled bicycle has three support points; the two feet of the stand and one wheel.

The point of attachment of the legs to the support base is rotary (pivotal) and has two definite working positions: retracted or extended position. Generally, the rotation of the legs from one position to the other is done manually using a foot. Such a stand may therefore be called a kickstand.

A disadvantage of a prior art double stand is that the legs may accidentally rotate back from the extended position to a retracted position if the bicycle gets a push or bump, especially the direction of travel. Without the legs in the extended position, the bicycle falls to the ground. The risk is increased when loading and unloading a cargo bike. As cargo bikes differ from regular bikes in their carrying capacity and are capable of carrying significantly more weight than a traditional bike, there is also a greater risk of personal injury and property damage if the support were to rotate to the retracted position when the cargo bike is parked.

One object of the present invention is to obviate at least some of the problems in the prior art and provide a kickstand with improved characteristics.

### SUMMARY

It is an object of the present invention to obviate at least some of the disadvantages in the prior art and to provide a kickstand for supporting a bicycle, the position of which may be conveniently controlled in order to avoid it accidentally retracting. These objects are achieved by the technique set forth in the appended independent claims with preferred embodiments defined in the dependent claims related thereto.

For this purpose, there is provided a kickstand for supporting the weight of a vehicle on a ground surface, comprising a support base configured to be fixedly attached to a frame of the vehicle, a support member pivotally attached to the support base, said support member comprising two supporting legs, said support member being movable between an extended position, in which the two supporting legs are configured to be in contact with the ground surface, and a retracted position, in which the two supporting legs are configured to at least not be in fully contact with the ground surface, and a latch connected to the support base, wherein said latch is movable between a locked position, in which it hinders movement of the support member and a release position, in which it allows movement of the support member, and a release device configured to control the position of the latch.

The locking mechanism of the latch prevents the bicycle support from being accidentally retracted by movement of the vehicle during parking. It may also prevent theft, particularly when combined with a securing mechanism used to lock the position of the latch in place.

### BRIEF DESCRIPTION OF THE DRAWINGS

These and other aspects, features and advantages of which the invention is capable of will be apparent and elucidated from the following description of embodiments of the present invention, reference being made to the accompanying drawings, in which:
Fig. 1a and Fig. 1b show a kickstand mounted on the underside of a frame of a bicycle, where Fig. 1a is viewed obliquely from the front, and Fig. 1b is viewed obliquely from the back,
Fig. 2 shows a kickstand, viewed obliquely from the front,
Fig. 3a and 3b shows the kickstand of Fig. 2 from the side, the kickstand in Fig. 3a being in a locked state and the kickstand in Fig. 3b being in an unlocked state,
Fig. 4 shows the kickstand of Fig. 2 from the side, comprising a release device, and
Fig. 5 shows a handlebar of a bicycle.

### DETAILED DESCRIPTION

Before the invention is disclosed and described in detail, it is to be understood that this invention is not limited to particular configurations, process steps and materials disclosed herein as such configurations, process steps and materials may vary somewhat. It is also to be understood that the terminology employed herein is used for the purpose of describing particular embodiments only and is not intended to be limiting since the scope of the present invention is limited only by the appended claims and equivalents thereof. It must be noted that, as used in this specification and the appended claims, the singular forms "a", "an" and "the" include plural referents unless the context clearly dictates otherwise. If nothing else is defined, any terms and scientific terminology used herein are intended to have the meanings commonly understood by those of skill in the art to which this invention pertains.

The invention relates to a kickstand for supporting vehicles such as bicycles (bikes), motorcycles, and tricycles when parked. While the kickstand may be described in the following text in relation to a certain type of vehicle, for example a bicycle, it is to be understood that the same features are applicable in relation to other vehicles as well, if not clearly incompatible.

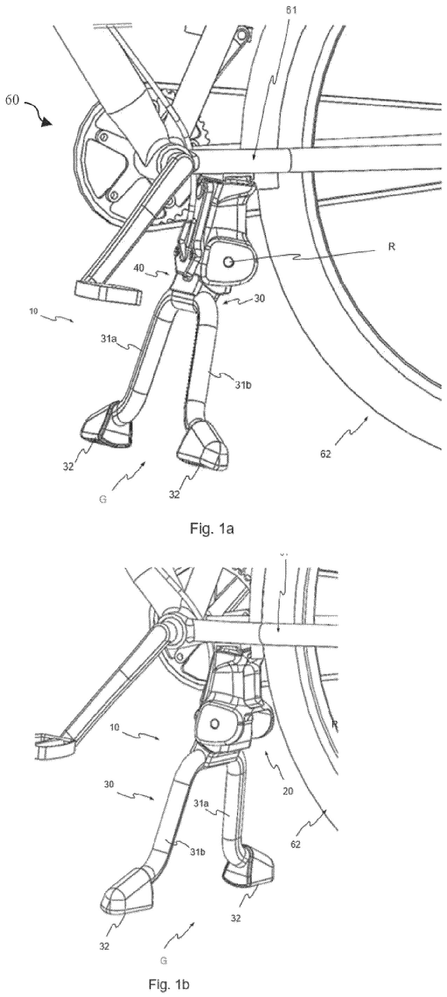

Fig. 1a and 1b illustrates a kickstand 10 for supporting a vehicle 60. In this specific example, the vehicle is a bicycle 60 and the kickstand is mounted to the underside of a frame tube 61 of the bicycle. As shown in Figs. 1a-b, the kickstand 10 comprises a support base 20, attached to the bicycle, and a support member 30 pivotally attached to the support base 20. The support base 20 may be configured to be mounted with one or more fasteners or permanently mounted, for example welded, to the frame tube of the bike.

In the example of Fig. 1a-b, the support member 30 comprises two supporting legs 31a, 31b. The two supporting legs 31a, 31b are movable between an extended (unfolded, folded down, supporting) position, in which the two supporting legs 31 are configured to be in contact with the ground, and a retracted (folded up) position, in which the two supporting legs 31 are configured to not be in contact with the ground. This means that in the retracted position, the supporting legs are fully lifted off the ground, leaving a gap to the ground. The intention is to ensure that the legs do not provide any significant resistance to movement when in the retracted position, thereby preventing unintended interference with the bike's operation or creating unnecessary drag. In the extended position, the two supporting legs 31 support at least some of the weight of the vehicle. This refers to when the vehicle is standing up in a traveling/parking position, with the ground underneath the wheels, as in Figs. 1a-b. The support member 30 is rotatable in relation to a rotation center R present where the support member 30 is attached to a support base 20.

The length of the support legs 31a-b may be adapted to the geometric dimensions of the bicycle, which means that in the extended position, the support legs 31 lift the front or rear wheel slightly off the ground and distribute the weight of the cargo bike in a triangular formation between the double support points (feet) 32 and the front or rear wheel, in order to obtain as vertical a plane as possible, which facilitates loading and unloading of the load. When the cargo bike is close to a vertical plane, the effort required to stabilize the bike during loading and unloading is minimized. This is because the center of gravity of the bike and the load is more directly above the support points (feet) 32. A more vertical plane reduces the likelihood of the bike tipping or requiring the user to exert significant force to maintain balance, making the process safer and more convenient, especially when handling heavy or bulky items. In the case of a three-wheeled vehicle, there may be three or four support points.

Generally, the legs 31a-b extend backwards (in relation to the intended travelling direction) from the center of rotation R, where they are attached to the support base 20, in the retracted position, and therefrom, the end points 32 of the legs are pushed downwards and forward into the extended position. It is also conceivable that the legs point forward in the retracted position.

The support legs 31a-b may in the most extended position be vertically extended, in an angle of around ninety degrees from the direction of travel and the centerline of the bicycle. The angle may also be greater, with the legs being further tilted away from the wheel(s) providing the additional support point(s) when in the extended position.

It is advantageous to have the support end point (the point that touches the ground) 32 of the legs in the extended position as close to the center of rotation R as possible while still providing the support function. The length of the legs is thereby adapted such that the support would reach slightly beyond the ground in the extended position, such that the vehicle is slightly lifted up when resting on the kickstand 10. This creates the least possible rotational movement for the user when parking, and the weight of the bicycle loads the support legs 31a-b in the most optimal way. By minimizing the rotational movement, the bike remains more stable and predictable as the weight of the bicycle loads the support legs 31a-b in the most optimal way. This reduces the risk of the bike unexpectedly tilting or falling and translates to a more effortless parking experience, particularly on uneven surfaces. With a properly adjusted length of the legs 31a-b and optimal end position of the rotation, i.e. the extended position, the legs can be near perpendicular to the ground.

In some examples, the support end points of the support legs 31 may be designed with a larger surface area, a foot 32, to better distribute the weight from the bicycle to the ground.

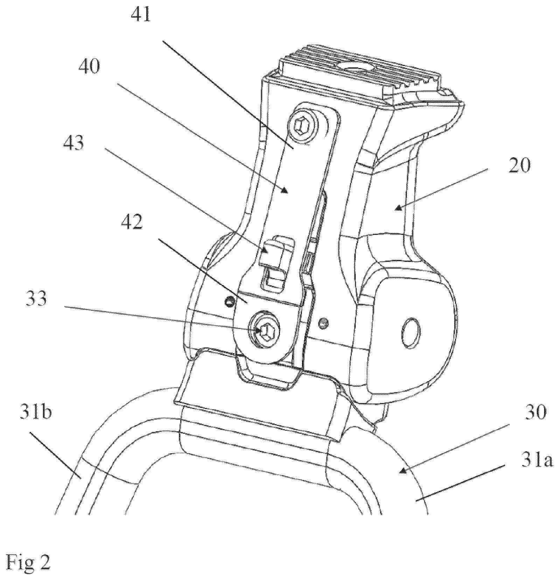

Turning to Figs. 2 - 4, the details of the kickstand 10 will be described more in detail. Fig. 2 shows a support base 20, a support member 30, a latch 40 connected to the support base 20 and a locking member 33 connected to the support member 30.

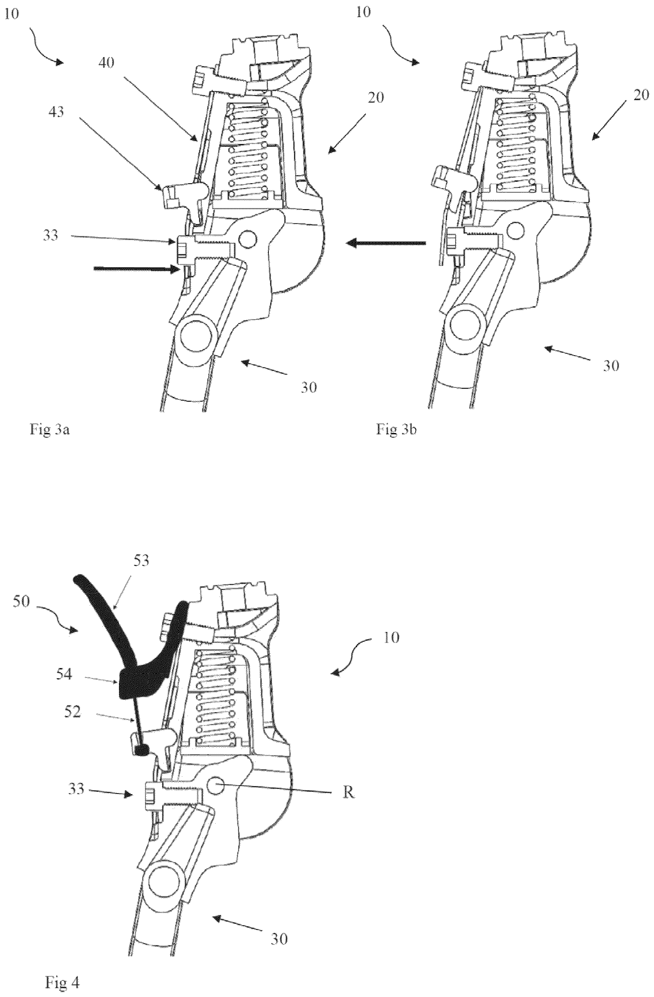

The latch 40 is movable between a locked position (Fig. 3a) and a release position (Fig. 3b). In the locked position, the latch 40 hinders movement of the support member 30, here so via a locking member 33 connected to the support member 30, thus placing the kickstand 10 in a locked state. In the release positon, the latch 40 is positioned to allow movement the locking member 33 and thereby the support member 30 is free to rotate, thus placing the kickstand in an unlocked state. The support member 30 is thereby movable from the extended position to the retracted position only when the latch 40 is in the release position. In other words, the latch acts on the support member 30, locking it from moving into the retracted position when the support member 30 is engaged by the latch 40 in the locked position.

The latch 40 may have an elongated shape. The latch 40 may be formed by an elongated plate of a hard material such as steel. A first section 41 of the latch 40 may be pivotally attached to the support base 20 and a second section 42 of the latch 40 be configured to engage support member 30 (eg. via the locking member 33) in the locked position and to be disengaged from the support member 30in the release position. The first and second sections may be by opposite ends of the latch.

In one embodiment, the latch 40 is connected to the support base 20 in a manner that allows it to move between a locked position, where it hinders movement of the support member 30, and a release position, where it allows movement of the support member 30. This connection can be achieved through various means. For instance, the latch 40 may be pivotally connected to the support base 20, allowing it to swing or rotate between the locked and release positions, facilitated by a hinge, pin, or similar mechanism. Alternatively, the latch 40 may be slidably connected to the support base 20, allowing for linear movement between the locked and release positions, guided by a track, groove, or similar structure. In another embodiment, the latch 40 may be connected to the support base 20 via a flexible element, such as a spring or elastic material, enabling it to flex or deform between the locked and release positions. It is also conceivable to utilize a combination of these connection types; for example, the latch 40 may be pivotally connected to a slider that moves linearly along the support base 20. The specific type of connection used will depend on the desired characteristics of the kickstand, such as the required force, speed, and precision of the latch movement, as well as the overall design and manufacturing considerations.

In Figs. 2-4, the locking member 33 forms a protrusion extending from the support member 30 towards the latch 40. The protrusion is hindered from movement by the latch 40 when the latch is in the locked position. This may for example be by interaction of the protrusion with a recess or hole in the latch 40, which at least partly surrounds the locking member 33 in the locked position. In Figs. 2-4, an example is seen where the locking member 33 is a screw that is screwed into an upper part of the support member 30, the head of which screw forms such a protrusion, which matches a hole in the latch 40. In the locked position, the hole surrounds the screw head and hinders the screw head from moving, and thereby the support member 30 from rotating.

In another example, not shown in the figures, the locking member 33 is in form of recess into the support member 30, into which a part of the latch 40 enters in the locked position, hindering the support member 30 from movement.

The locking member 33 may be an integrated part of the support member 30, or be a separate, attached part (such as a screw).

In an alternative embodiment, no separate locking member 33 is present. The latch 40 interacts directly with the support member 30. The latch 40 may for example be formed such that it partly surrounds a part of the support member 30 in the locked position, the latch 40 being configured to release the support member 30 when pulled away from it by a release device. The latch may for example comprise an elastic part which snaps into place partly surrounding the support member 30 when pushed into the locked position, the release of which is facilitated by a release device 50. A release device 50 may for example act on the latch to deform it, such that it may be pulled into its release position.

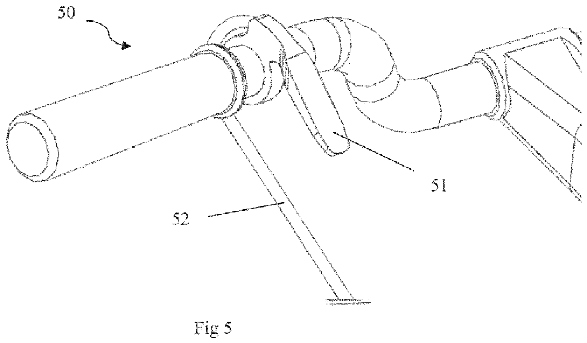

As seen in Figs. 4-5, the kickstand 10 may further comprise a release device 50 configured to control the position of the latch 40, and thereby the state of the kickstand 10. The release device 50 may comprise a release unit 51, which controls the operation of the release device 50. The release unit 51 may be mounted on the bicycle handlebars, for example, or at any location on the bicycle frame. The release unit 51 may be a handle or a button. The release device 50 may activate movement of the second section 42 of the latch 40. The release device 50 may comprise a wire 52 connecting a release unit 51 to the latch 40. The wire may be pulled by an interaction between a user and the release unit, in turn pulling the latch 40. A handle 51 and wire 52 of a release device 50 is seen in Fig. 5. The wire 52 may be covered by a wire cover 53, which may be attached to the support base 20 by a wire cover end holder 54 (Fig. 4). In one example, the wire 52 activates the second section of latch 42 of the latch 40 directly. However, other activation methods are also possible, such as hydraulic activation, pneumatic activation, shape memory alloy actuators, piezoelectric actuators, cam mechanisms, lever systems, or magnetic attraction/repulsion. The choice of activation method depends on factors such as required force, speed, precision, and cost.

It is also possible to mount an electric motor which rotationally or linearly pulls in the wire 52, or pulls or pushes the second latch into the locked position or release position. This could be achieved using a variety of mechanisms, such as a solenoid, a linear actuator, a servo motor with linkage, a cam and follower, a lever, a rack and pinion mechanism, or a worm gear. The choice of mechanism depends on factors such as required force, precision, speed, and cost. This is especially useful on electric bikes that have a battery, which most cargo bikes today are equipped with. This feature may be controlled by for example pushing a button, which may be located near the handle area of the vehicle or on the frame.

The latch 40 may lock the support member 30 in the extended position either by manual interaction by a user (such as pushing it into place) or automatically when the support member 30 is pushed into the extended position. For example, the latch 40 may automatically fall into the locked position when the support member 30 is lowered into the extended position.

After moving the support member 30 into the extended position, the kickstand is maintained in the extended position until the latch is actively released. The user can load or unload the stationary bike without the risk of the kickstand retracting and the bicycle falling, and at the desired departure, release the latch 40 and thus support member 30 via the release device 50.

The kickstand 10 is convenient, easy and intuitive to operate. The locking mechanism has a minimum of necessary parts and is easy to manufacture.

As seen in Figs. 2-4, the latch 40 may comprise a lifting member 43, which may protrude from the latch 40, configured to facilitate pulling the latch 40 from the locked position to the release position. For example, a wire 51 of the release device 50 may be fastened to the lifting member 43 (Fig. 4).

As the latch 40 only needs a short movement to disengage from the locking member 33, in addition to release via a wire, an electromagnet, electric motor or other transmission, such as a drawbar, can also be used. Such an electromagnet may be controlled by a release unit 52 or remote control. The use of an electromagnet offers advantages such as remote operation and smooth release.

The kickstand 10 may comprise an elastic member which is extended in the release position of the latch 40. On end of the elastic member may be attached to the latch 40 and another end to the support member 30 or support base 20. The elastic member may be a tension spring. The latch 40 may be in a resting state in the locked position, by being held by such a spring, and be forced outwards into the release position by the release device 50, such as by being pulled by a wire 52 or electromagnet of the release device.

The kickstand 10 may further comprise a securing mechanism which secures the latch 40 in the locked position. The securing mechanism may comprise an electronic lock, a code lock and/or a lock cylinder.. The securing mechanism may be controlled by a wireless remote control or manual key. In one example the securing mechanism is a wireless remote control, possibly with encryption The securing mechanism may be an integrated part of the kickstand, or be provided as a separate part. Such a configuration prevents an unauthorized person from unlocking the support and thereby prevents theft. The effectiveness of the securing mechanism may depend on its resistance to tampering, durability, and ease of use, and it could be seamlessly integrated into the kickstand design to prevent interference with the kickstand's operation. For example, an electronic lock could use a motorized bolt controlled via a smartphone app, while a code lock would require entering a specific code to release the latch.

The kickstand may further be provided with an automatic lifting mechanism designed to enable the automatic rotation of the support member from the extended position to the retracted position.

### Reference numbers

- 10: kickstand
- 20: support base
- 30: support member
- 31a-b: support leg
- 32: support point (foot)
- 33: locking member
- 40: latch
- 41: first section of latch
- 42: second section of latch
- 43: lifting member
- 50: release device
- 51: release unit
- 52: wire
- 53: wire cover
- 54: wire cover end holder
- 60: vehicle
- 61: vehicle frame
- 62: wheel

## Claims

1. A kickstand (10) for supporting the weight of a vehicle (60) on a ground surface (G), comprising
- a support base (20) configured to be fixedly attached to a frame (61) of the vehicle (60),
- a support member (30) pivotally attached to the support base (20), said support member (30) comprising two supporting legs (31a-b), said support member (30) being movable between an extended position, in which the two supporting legs (31a-b) are configured to be in contact with the ground surface (G), and a retracted position, in which the two supporting legs (3 1a-b) are configured to at least not be in fully contact with the ground surface (G), and
- a latch (40) connected to the support base (20), wherein said latch (40) is movable between a locked position, in which it hinders movement of the support member (30) and a release position, in which it allows movement of the support member (30), and
- a release device (50) configured to control the position of the latch (40).

2. The kickstand (10) according to claim 1, wherein a first section (41) of the latch (41) is pivotally attached to the support base (20) and a second section (42) of the latch (40) is configured to hinder movement of the support member (30) when in the locked position and allow movement of the support member (30) when in the release position.

3. The kickstand (10) according to any of the preceding claims, wherein the support member (30) comprises a locking member (33), wherein the latch (40) hinders movement of the support member (30) in the locked position by fixating the position of the locking member (33).

4. The kickstand (10) according to claim 3, wherein the locking member (33) forms a protrusion extending from the support member (30) towards the latch (40), the movement of which protrusion is hindered by a recess in the latch (40) in the locked position.

5. The kickstand (10) according to any of claims 3 and 4, wherein the locking member (3) forms a recess, into which the latch (40) reaches in the locked position.

6. The kickstand (10) according to any of the preceding claims, wherein the latch (40) comprises a lifting member (43) protruding from the latch (40), configured for facilitating pulling the latch (40) from the locked position to the release position.

7. The kickstand (10) according to any of the preceding claims, wherein the kickstand (10) comprises elastic member connecting the latch (40) to the support base (20) or to the support member (30), said elastic member being extended in the release position of the latch (40).

8. The kickstand (10) according to any of the preceding claims, wherein the release device (50) comprises a wire (52) connecting the latch (40) to a release unit (52).

9. The kickstand (10) according to any of the preceding claims, wherein the release device (50) comprises an electromagnet controllable by a release unit (52).

10. The kickstand (10) according to claim 8 or 9, wherein the release unit (52) is a handle or a button on a handlebar.

11. The kickstand (10) according to any of the preceding claims, further comprising a securing mechanism, which secures the latch (40) in the locked position, said securing mechanism comprising an electronic lock, a code lock and/or a lock cylinder.

12. A vehicle comprising the kickstand (10) according to any one of claims 1 - 11.

13. The vehicle according to claim 12, wherein the vehicle is a bicycle.
